(19) **Europäisches Patentamt**

**European Patent Office**

**Office européen des brevets**

(11) **EP 1 666 544 A1**

(12) **EUROPEAN PATENT APPLICATION**
published in accordance with Art. 158(3) EPC

(43) Date of publication:
**07.06.2006 Bulletin 2006/23**

(51) Int Cl.:
*C09C 1/48* (1968.09)  *C09C 3/06* (1974.07)
*C09C 1/24* (1968.09)  *C09C 1/36* (1968.09)
*C09C 1/14* (1968.09)  *C09C 1/00* (1968.09)
*C09D 11/00* (1968.09)  *C09D 201/00* (1990.01)
*C08L 101/00* (1985.01)  *C08K 9/02* (1990.01)
*C08K 7/00* (1990.01)

(21) Application number: **04787953.1**

(22) Date of filing: **21.09.2004**

(86) International application number:
**PCT/JP2004/013770**

(87) International publication number:
**WO 2005/028568 (31.03.2005 Gazette 2005/13)**

(84) Designated Contracting States:
**DE FR GB IT**

(30) Priority: **22.09.2003 JP 2003329238**

(71) Applicant: **Nippon Sheet Glass Co.,Ltd.**
**Tokyo 105-8552 (JP)**

(72) Inventors:
• **YOKOI, Koji c/o NIPPON SHEET GLASS**
  **COMPANY,**
  **Minato-ku, Tokyo 1058552 (JP)**

• **HIRASHIMA, Takashi c/o NIPPON SHEET GLASS**
  **Minato-ku, Tokyo 1058552 (JP)**
• **FURUICHI, Toshitaka c/o NIPPON SHEET**
  **Minato-ku, Tokyo 1058552 (JP)**
• **INO, Juichi c/o NIPPON SHEET GLASS**
  **COMPANY,**
  **Minato-ku, Tokyo 1058552 (JP)**

(74) Representative: **Teipel, Stephan et al**
**Lederer & Keller**
**Patentanwälte**
**Prinzregentenstrasse 16**
**80538 München (DE)**

(54) **BLACK BRIGTHENING FLAKE AND COSMETIC PREPARATION, COATING COMPOSITION, RESIN COMPOSITION, AND INK COMPOSITION EACH CONTAINING THE SAME**

(57) The present invention provides a black brightening flake which prevents fine pigment particles from agglomerating. When incorporated into a cosmetic, a coating material, etc., the flakes enable the resultant composition not only to give a satisfactory use feeling, for example, spreadability on the skin, without giving a rough feeling or be satisfactory spread on a base plate but also to have high hiding power and take on a beautiful color tone. The black brightening flake comprises a metal oxide, as a mother material, which is derived from a colloidal metal oxide particle and 5 to 70% by mass black pigment dispersedly contained in the base material. The black brightening flake has an average particle diameter of 3 to 500 μm, an average thickness of 0.1 to 5 μm, and an average aspect ratio of 5 to 300.

EP 1 666 544 A1

## Description

### Technical Field

The present invention relates to a black brightening flake incorporated into a cosmetic, a coating material, a resin, a film, or an ink, etc. as a pigment. The present invention further relates to a cosmetic preparation, a coating material, a resin composition, a resin molded product, and an ink, each containing said black brightening flake.

### Background Art

Black pigments are exemplified by black iron oxide (magnetite $Fe_3O_4$), black titanium oxide (low order titanium oxide $TiO_x$, wherein x is less than 2), carbon black, copper chromium black, cobalt black, and copper manganese black, etc. They have a problem that since they are powders consisting of amorphous particles, it is difficult to disperse such particles uniformly and even if the dispersion is possible, they agglomerate again to form aggregates and to become unevenness. In addition, since black iron oxide has magnetic property, in particular, it easily agglomerates and thus its dispersion was very difficult. Further, there was a problem in that such black iron oxide was discolored by acids or heat. Regarding to carbon black, it has a problem that its dust tends to spread because of light weight, and its safety is concerned since it sometimes contains benzpyrene which has the possibility of carcinogenesis. Black titanium oxide is relatively safe, however, it has a problem that its dispersion is difficult due to the form of amorphous particles.

Further, black iron oxide exhibits reddish black, black titanium oxide exhibits bluish black, and carbon black exhibits black which takes on a color depending on its production process. For example, a carbon black produced by channel process exhibits reddish black and a carbon black produced by furnace process exhibits bluish black. Each black pigment does not present deep-black and takes on a subtle color tone. It is desired that a black color corresponding to various sensibilities can be delicately adjusted by appropriately adjusting these color tones to obtain deep-black, faint bluish black, and slight reddish black, etc.

JP-9-175824-A (Patent Literature 1) discloses a coating method of black iron oxide (magnetite) particles with silica for the improvement of heat resistance and acid resistance, and JP-7-89721-A (Patent Literature 2) describes a spherical black titanium oxide (low order titanium oxide) coated with silica. Also, in JP-2002-363441-A (Patent Literature 3), there is disclosed a black pigment wherein the surface of low order titanium oxide powder represented by $TiN_xO_y$ or $Ti_nO_{2n-1}$ is coated with silica, or alumina, or the like. Furthermore, JP-9-286633-A (Patent Literature 4) discloses a flaky glass containing fine particles of low order titanium oxide, titanium oxynitride, and titanium nitride in.

### Disclosure of the Invention

### Problem to be Solved by the Invention

The methods described in Patent Literatures 1 to 3 have, however, a problem that the dispersibility of a pigment itself was not improved and the pigment was apt to agglomerate since one particle of the pigment was coated with silica, etc. In addition, the flaky glass containing fine particles disclosed in Patent Literature 4 has a problem that it does not have high hiding power.

The present invention has been achieved in view of the above problems. An object of the present invention is to provide black brightening flakes which prevent pigment fine particles from agglomeration, and which enable the resultant composition not only to give a satisfactory use feeling, for example, spreadability on the skin, without giving a rough feeling or be satisfactory spread on a base material but also to have high hiding power and take on a beautiful color tone when incorporated into a cosmetic or a coating material, etc.

### Means for Solving the Problem

The black brightening flakes according to the present invention comprise a metal oxide, as a mother material, which is derived from a colloidal metal oxide particle and comprise 5 to 70% by mass a black pigment dispersedly contained in the mother material.

The black brightening flake according to the present invention is suitable as a filler for cosmetics or resin compositions, and it has a characteristic that agglomeration does not occur easily due to flaky shape. Therefore, for example, when the black brightening flake is incorporated into a cosmetic, there is no deterioration in use feeling, such as rough feeling. The black brightening flake has a high heat resistance and a high acid resistance, and can be used as a black pigment exhibiting an arbitrary color tone.

The black brightening flake comprises one or two or more members of black pigments incorporated dispersedly in an arbitrary ratio. Since the black brightening flakes which are incorporated into a cosmetic, a coating material, a resin composition for film, and an ink composition, etc. so as to be finally in thin film form are arranged in the inside of the thin film without agglomeration while being oriented in parallel to the film face of the thin film, the fine pigment particles in the flakes are arranged evenly, resulting in giving a higher effect as a pigment.

If a cosmetic, a coating material, a resin composition for film, an ink composition, or the like contains a black pigment which is not enclosed in the flake, the black pigment particles agglomerate with each other to form a secondary particle having a large particle diameter. The agglomeration of black pigment particles (formation of secondary particles) causes unevenness in the coating film, and the hiding power of the coated film is lowered since the visible light ray passes easily through a microscopic void between the black pigment particles which are present sparsely. In addition, a cosmetic containing the black pigment particles which are not contained in the black brightening flakes becomes to be poor in spreadability and use feeling since the black pigment particles tend to agglomerate easily with each other. A coating material containing fine particles which are not enclosed in the black brightening flakes has a poor spreadability at the time of incorporation.

The black brightening flake has preferably an average particle diameter of 3 to 500 $\mu$m, an average thickness of 0.1 to 5 $\mu$m, and an average aspect ratio of 5 to 300, more preferably an average particle diameter of 5 to 300 $\mu$m, an average thickness of 0.2 to 2.5 $\mu$m, and an average aspect ratio of 8 to 200, furthermore preferably an average particle diameter of 6 to 50 $\mu$m, an average thickness of 0.4 to 2.0 $\mu$m, and an average aspect ratio of 8 to 50. If the average particle diameter is less than 3 $\mu$m, the black brightening flake tends to easily agglomerates and becomes uneven. On the other hand, if the average particle diameter is more than 500 $\mu$m, the black brightening flake is easily broken when incorporated as a filler, and in the case of addition to a cosmetic, its use feeling of the cosmetic is deteriorated, resulting in, for example, causing rough feeling. If the average thickness is less than 0.1 $\mu$m, the black brightening flake has problems that the production thereof is difficult and it is easily broken. On the other hand, if the average thickness of the flake is more than 5 $\mu$m, in the case of addition to a coating material, the surface of the coating film becomes uneven to worsen the appearance, or in the case of addition to a cosmetic, rough feeling is caused and thus the use feeling is worsened. If the average aspect ratio is less than 5, characteristics of spherical particles tend to appear and the flakes tend to easily agglomerate. On the other hand, if the aspect ratio is more than 300, the black flakes are easily broken at the time of addition as a filler.

The average particle diameter of the black brightening flake can be determined by a particle size distribution measuring instrument using laser light diffraction/scattering, for example, Microtrac II (manufactured by NIKKISO Co. , Ltd.) . The average thickness can be determined by calculating a simple average of measurement results of 50 pieces of the black brightening flakes by an electron microscope. The average aspect ratio can be determined by dividing the value of the above-mentioned average particle diameter by the value of the above-mentioned average thickness.

Examples of the black pigment to be contained in the black brightening flake include, for example, black iron oxide (triiron tetroxide, magnetite, $Fe_3O_4$), black titanium oxide (low order titanium oxide $TiO_x$, wherein x is less than 2, specifically 1.5 to 1.8), carbon black, acetylene black, lamp black, bone black, mineral black, aniline black, cyanine black, copper chromium black, cobalt black, copper manganese black and so on. Among these pigments, inorganic black pigments such as black iron oxide and black titanium oxide are preferably used. One of these black pigments or a mixture of two or more thereof may be contained in the black brightening flake. Black iron oxide exhibits reddish black, black titanium oxide exhibits bluish black, and carbon black produced by channel process exhibits reddish black, and carbon black produced by furnace process exhibits bluish black, etc., depending on the production method. Since such black pigments have each a subtly different color, these pigments may be mixed at a prescribed ratio to develop an arbitrary black color tone. For example, when black iron oxide and black titanium oxide are mixed, a reddish tone and a bluish tone are interfered each other, thereby to develop a more deep-black color tone.

The content of the black pigment in the black brightening flake is 5 to 70% by mass, preferably 8 to 60% by mass. If the content is less than 5% by mass, the black coloration is a little and thus the hiding power is poor. On the other hand, if the content is more than 70% by mass, the black brightening flake becomes fragile and its mechanical strength is deteriorated. The shape of the black brightening flake is not particularly limited, and may be amorphous, spherical, cylindrical, spindle-shaped, and the like. The content of the black pigment can be defined by the following equation:

$$\text{Content of black pigment (\% by mass)} = \frac{\text{Mass of black pigment}}{\text{Mass of black brightening flake}} \times 100$$

The black brightening flake comprises a metal oxide, as a mother material, which is derived from colloidal metal oxide particles. This metal oxide includes those wherein a major component is at least one member selected from the group consisting of silicon dioxide, aluminum oxide, zirconium oxide, and titanium dioxide ($TiO_2$), etc. Examples of the colloidal metal oxide particles include, for example, colloidal silica particles, colloidal aluminum oxide particles, colloidal zirconium oxide particles, and colloidal titanium dioxide particles. Use of the metal oxide derived from the colloidal metal oxide particles as the mother material enables the black pigment particles to be contained in the mother material uniformly in a dispersed state so that the hiding power (against visible light ray) of the obtained black brightening flakes can be enhanced. If the metal oxide derived from a metal alkoxide or a metal organic acid salt is used as the mother material, the dispersibility of the black pigment particles contained in the mother material is insufficient and the hiding power of the obtained black brightening flakes is not so high.

The black brightening flake according to the present invention is produced by preparing a raw liquid wherein a black pigment is dispersed in a metal oxide colloidal solution, applying the raw liquid to the surface of a base material having a smooth surface to form a coating film, heating/drying the coating film to form a flake, and pealing off the formed flake from the above base material. The pealed flakes are burned at 200 to 1,200°C, where appropriate, crushed and classified to obtain black brightening flakes having an arbitrary average diameter. The above black pigments can be used as a black pigment to be dispersed in the above metal oxide colloidal solution. Alternatively, black color can be also obtained by incorporating a pigment such as, for example, $Fe_2O_3$ (hematite, red iron oxide) and $TiO_2$ (titanium dioxide) instead of the above black pigments, in the metal oxide colloidal solution, peeling off the coating film, and burning the film in a reduction atmosphere so that $Fe_2O_3$ is converted into $Fe_3O_4$ (black iron oxide), or $TiO_2$ into $TiO_x$ (low order titanium oxide).

The black brightening flake according to the present invention has high heat resistance and high acid resistance since the black pigment is contained dispersedly in the inside of the mother material of a metal oxide. In addition, since the black pigment itself is enclosed in the mother material, there is no case where the black pigment is peeled and fallen. Thus, since the base material of the black brightening flakes is uniformly dispersed in a dispersant such as cosmetics, coating materials, and resins, the flakes will not produce unevenness and will not form aggregates thereof. In addition, since various kinds of black pigments can be mixed in a given ratio to enclose the black pigment particles in the mother material, it is possible to delicately adjust the color tone. Further, since a metal oxide covers the surrounding of the black pigment particles, and the black brightening flakes have a smooth surface, the flakes cause specular reflection to the light. Accordingly, there is obtained a pigment exhibiting a brilliant black, beautifully transparent, and clear color tone. Furthermore, since the black brightening flakes contact with each other at the smooth surfaces, and the abrasion resistance is small and the lubricity is good, use feeling is good in cosmetics, etc.

By using the black brightening flakes as a cosmetic powder or incorporating them with a cosmetic, there can be prepared a cosmetic capable of exhibiting a black color which has never been obtained so far, for example, a black color which is not discolored even in a hair colorant wherein a strong oxidizing agent is used, and touch feeling of such cosmetic is good. The content of the black brightening flakes in a cosmetic is preferably 1 to 100% by mass. If the content is less than 1% by mass, black coloration is weak. In the case of a powder cosmetic such as eye shadow and face colorant used as a loose powder, the content may be 100% since the black brightening flakes are mixed with human fats existing on the skin at the time of use.

The black brightening flake may be appropriately subjected to hydrophobic treatment in accordance with the purpose of the cosmetic. Examples of the method for the hydrophobic treatment include a treatment using silicone compounds such as methylhydrogene polysiloxane, a highly viscid silicone oil, and a silicone resin; a treatment using surfactants such as anionic surfactant and cationic surfactant ; a treatment using polymer compounds such as nylon, poly(methyl methacrylate), polyethylene, fluororesin, and polyamino acid; a treatment using perfluoro group-containing compound, lecithin, collagen, metal soap, lipophilic wax, partial or complete ester of polyhydric alcohol; and a treatment in combination thereof. However, the treatment is not limited to these exemplified treatments and any method for the hydrophobic treatment of a powder can be applicable.

Other components usually used in cosmetics can be appropriately incorporated into the cosmetic, in addition to the black brightening flakes of the present invention. Examples of such other components include inorganic powders, organic powders, pigments, colorants, oily components, organic solvents, resins, and plasticizers, and so on. Examples of inorganic powders include, for example, talc, kaolin, sericite, muscovite, phlogopite, lepidolite, biotite, lithia mica, vermiculite, magnesium carbonate, calcium carbonate, diatomaceus earth, magnesium silicate, calcium silicate, aluminum silicate, barium silicate, barium sulfate, strontium silicate, metal tungstates, silica, hydroxyapatite, zeolite, boron nitride, and ceramic powder, and so on.

Examples of the organic powders include nylon powder, polyethylene powder, polystyrene powder, benzoguanamine powder, polytetrafluoroethylene powder, distyrene-benzene polymer powder, epoxy powder, and acryl powder, and so on.

Examples of the pigments include microcrystalline cellulose; inorganic white pigments such as titanium dioxide and zinc oxide; inorganic red pigments such as iron oxide (red iron oxide) and iron titanate; inorganic brown pigments such as $\gamma$-iron oxide; inorganic yellow pigments such as yellow iron oxide and loess; inorganic black pigments such as black iron oxide and carbon black; inorganic violet pigments such as mango violet and cobalt violet; inorganic green pigments such as chromium oxide, chromium hydroxide, and cobalt titanate; inorganic blue pigments such as ultramarine blue and prussian blue; pearl pigments such as titanium oxide-coated mica, titanium oxide-coated bismuth oxychloride, titanium oxide-coated talc, scaly foil, and colored titanium oxide-coated mica; and metal powder pigments such as aluminum powder and copper powder, and so on.

Examples of the colorants include organic pigments such as Red No. 201, Red No. 202, Red No. 204, Red No. 205, Red No. 220, Red No. 226, Red No. 228, Red No. 405, Orange No. 203, Orange No. 204, Yellow No. 205, Yellow No. 401, and Blue No. 404, organic pigments such as zirconium, barium, and aluminum lakes of Red No. 3, Red No. 104, Red No. 106, Red No.227, Red No. 230, Red No. 401, Red No. 505, Orange No. 205, Yellow No. 4, Yellow No. 5, Yellow No. 202, Yellow No. 203, Green No . 3 , or Blue No. 1, natural colorants such as chlorophyll and β-carotene, and so on.

Further, examples of the oil components include various kinds of hydrocarbons, silicone oils, higher fatty acids, esters of fats and oils, higher alcohols, and waxes, such as squalane, liquid paraffin, vaseline, microcrystalline wax, ozokerite, ceresin, myristic acid, palmitic acid, stearic acid, oleic acid, isostearic acid, cetyl alcohol, hexadecyl alcohol, oleyl alcohol, cetyl 2-ethylhexanoate, 2-ethylhexyl palmitate, 2-octyldodecyl myristate, neopentyl glycol di-2-ethylhexanoate, glycerol tri-2-ethylhexanoate, 2-octyldodecyl oleate, isopropyl myristate, glycerol triisostearate, coconut fatty acid triglyceride, olive oil, avocado oil, beeswax, myristyl myristate, mink oil and lanolin, and so on.

In addition, examples of other components incorporated into a cosmetic include organic solvents such as acetone, toluene, butyl acetate, and acetic acid ester; resins such as alkyd resin and urea resin; plasticizers such as camphor and acetyl tributyl citrate; ultraviolet absorbents, antioxidants, antiseptics, surfactants, moisturizers, fragrances, water, alcohols, and thickners, and so on.

The cosmetic may take various forms such as a powder, a cake, a pencil, a stick, an ointment, a liquid, a milky lotion, a cream, and so on. They may include, for example, make-up cosmetics such as a foundation, a lipstick, an eye shadow, a cheek rouge, an eyeliner, a nail enamel, and a mascara; hair cosmetics such as a hair colorant; facial cosmetics such as a lotion, an emulsion, and a cream, and so on.

Further, the black brightening flake may be used as a filler for coating materials and resins to be kneaded therewith as well as a filler for films or inks, etc. in the same manner as in a conventional filler. When the black brightening flake is used as a coating material, the coating composition containing the black brightening flake is applied to a base plate and cured according to the conventional method, thereby to form a coating film. This coating film has a satisfactory spreadability on the base plate, and does not become uneven, and exhibits a black color with subtle color tone. When the black brightening flake is used for molded resin products, resin films, or inks, it is free from unevenness and exhibits a delicate black color. The content of the black brightening flake in the coating composition, the resin molding composition, or the ink composition is preferably 1 to 70% by mass. If the content is less than 1% by mass, black coloration is weak. If the content is more than 70% by mass, it is difficult to mix. The content of the black brightening flake is more preferably 3 to 50% by mass.

**Effect of the Invention**

The black brightening flake according to the present invention has high heat resistance and high acid resistance since the black pigment is contained dispersedly in a mother material of the black brightening flakes. Since the metal oxide covers the surrounding of the black pigment particles and is a flake having a smooth surface, such flakes cause specular reflection of light and give a pigment exhibiting a brilliant black, beautifully transparent, and clear color tone. Since the mother material for the black brightening flakes of the present invention comprises a metal oxide derived from colloidal metal oxide particles, there is obtained a black brightening flake showing an excellent hiding power. Further, when the black brightening flake is used as a filler for cosmetics, coating materials, resin molded products, or inks, it gives a satisfactory use feeling and good touch feeling, and exhibits a transparent and clear black color with brightness because it does not agglomerate.

**Best Mode for Carrying Out the Invention**

The present invention will be described in more detail by way of the following Examples, but it is to be understood that the invention is not limited thereto.

**Examples**

Hue was evaluated by the following means with regard to the black brightening flakes prepared in each Examples and Comparative Examples.

Evaluation of uniform dispersibility

The black brightening flakes were added to the acrylic resin coating material(trade name: Acryl Auto Clear Super, manufactured by NIPPON PAINT Co. , Ltd.; solid matter: about 50% by mass) in such a manner that the concentration of the black brightening flake became to be 10% by mass in the resin. After being mixed well with stirring, the mixture was applied to a chart for the measurement of hiding power using an applicator having a slit of 9 mil (9/1,000 inch) and dried. The applied plate was observed visually to measure the evenness of the applied surface, and the presence or absence of the aggregate thereon. The evaluation of dispersibility was carried out according to the following description.

⊚: The dispersibility was good, and the coating film was uniform.
O: The dispersibility was good to some extent, but the aggregate or the projection of the pigment from the coating film was partially observed.
Δ: The dispersibility was relatively poor, and many aggregates or projections of the pigment were observed.
✕ : Many aggregates were observed, and the coating film was in a state of much unevenness and roughness.

Method of Hue Evaluation

The hue value (L*, a*, and b*) of the coated plate prepared in the above in the black background was determined using a Chroma Meter CR-300 (manufactured by MINOLTA) for measuring color and color difference.

[Evaluation of Hiding Power]

The hiding power was evaluated by the value wherein the L* value in the white background ($L^*_W$) was divided by L value in the black background ($L^*_B$). The obtained value was designated as hiding index. The smaller the difference between the L value in the white back ground and the L value in the black background is (i.e. , the closer the hiding index is to 1), the higher the hiding power becomes.

$$\text{Hiding index} = L^*_W / L^*_B$$

Evaluation of Acid Resistance

A sample of the black brightening flakes was added to 3.5% hydrochloric acid. An acid treatment was performed by stirring at 60°C for 1 hour, and the mixture was washed with water, filtered, neutralized and dried to prepare an acid-treated sample. The applied plates of both the acid-treated sample and the non-treated sample were drawn by the above method, and the hues were measured by the above method to obtain ΔE, wherein ($\Delta E = \sqrt{(a^{*2} + b^{*2})}$). The larger the ΔE value is, the more the hue changes.

Examples 1 to 7

670 g of a colloidal silica (trade name: SILICADOL 30A, manufactured by NIPPON CHEMICAL INDUSTRIAL Co. , Ltd. ; particle diameter is 20 nm, and dispersion medium is water) having the content of silica, i.e. silicon dioxide, of about 30% by mass, 500 g of ethanol, and 500 g of water were mixed. The various black pigments shown in Table 1 was added thereto in each given amount, and dispersed uniformly by means of a homogenizer to prepare a silica sol solution containing the dispersed black pigment. A stainless steel plate of 10 cm square was dipped into the above solution, and applied to the stainless steel plate by the dipping method so as to have the coating film thickness of 1.0 μm after drying. The stainless steel plate was placed in a drying furnace at 120°C for 5 minutes and the coating film was dried, and then the flake was peeled off by scraping with a scraper. The obtained flakes were burned at 400°C for 2 hours to obtain fine black brightening flakes containing the dispersed black pigment and having silica as a major component. The black brightening flakes were classified by the known equipment to adjust them to those having an average diameter of 15 μm, an average thickness of 1.0 μm, and an average aspect ratio of 15.
With regard to these black brightening flakes, the dispersibility, the hue values L*, a*, and b*, and the hiding power of the black brightening flakes in the coating film were measured according to the above means. Table 1 shows the results of the average particle diameter (μm), the average thickness (μm), the average aspect ratio, the kind of black pigments, the content of black pigments (% by mass), the dispersibility, and the hue values L*, a*, and b*. In each case, the dispersibility was very good and the coating film had a uniform surface. Further, in the case that two or more members of the pigments were mixed and used, the hue values L*, a*, and b* exhibits a middle hue between those of both the pigments. The hiding index was 1.00 to 1.10, indicating that each hiding power was very high.

Table 1

| Example | 1 | 2 | 3 | 4 | 5 | 6 | 7 |
|---|---|---|---|---|---|---|---|
| Average diameter ($\mu$m) | 15 | 15 | 15 | 15 | 15 | 15 | 15 |
| Average thickness ($\mu$m) | 1 | 1 | 1 | 1 | 1 | 1 | 1 |
| Average aspect ratio | 15 | 15 | 15 | 15 | 15 | 15 | 15 |
| Black pigment | 1) | 1) | 2) | 3) | 4) | 4) | 5) |
| Content of black pigment (% by mass) | 10 | 30 | 30 | 30 | 30 | 60 | 30 |
| Dispersibility | ◎ | ◎ | ◎ | ◎ | ◎ | ◎ | ◎ |
| L* | 36.8 | 31.8 | 29.0 | 29.3 | 30.5 | 28.6 | 29.9 |
| a* | 1.02 | 0.99 | 0.20 | 0.41 | 0.55 | 0.53 | 0.38 |
| b* | -0.85 | -0.80 | -0.24 | 0.39 | -0.52 | -0.50 | 0.13 |
| Hiding index | 1.10 | 1.05 | 1.03 | 1.02 | 1.03 | 1.00 | 1.03 |
| Note) Black Pigment<br>1) Black iron oxide (manufactured by Daito Kasei Kogyo Co., Ltd.)<br>2) Black titanium oxide (manufactured by Mitsubishi Materials Co.)<br>3) Black carbon No.4 (manufactured by Degussa AG)<br>4) Mixture of 1) black iron oxide and 2) black titanium oxide (1:1, mass ratio)<br>5) Mixture of 2) black titanium oxide and 3) black carbon (1:1, mass ratio) | | | | | | | |

Comparative Examples 1 to 3

The coated plates were prepared similarly to Example 1 except that black iron oxide (Comparative Example 1), black titanium oxide (Comparative Example 2), and black carbon (Comparative Example 3) were used respectively, instead of the black brightening flake used in Example 1. The dispersibility, and the hue values L*, a*, and b* of the black brightening flakes in the coating film were evaluated similarly to Example 1 . The results are shown in Table 2. As can be seen from Table 2, it is recognized that the dispersibility was very poor, and many aggregates or unevenness occurred in Comparative Examples.

Table 2

| Comparative Example | 1 | 2 | 3 |
|---|---|---|---|
| Raw material for black pigment | 1 | 2 | 3 |
| Dispersibility | x | x | x |
| L* | 22.6 | 24.0 | 23.7 |
| a* | 1.05 | 0.21 | 0.45 |
| b* | -0.83 | -0.27 | 0.39 |
| Note) Raw Material for Black Pigment<br>1) Black iron oxide (manufactured by Daito Kasei Kogyo Co., Ltd.)<br>2) Black titanium oxide (manufactured by Mitsubishi Materials Co.)<br>3) Black carbon No.4 (manufactured by Degussa AG) | | | |

By comparison of the above Examples with these Comparative Examples, it is understood that the black brightening flakes containing dispersedly the black pigment of Examples had very good dispersibility. Further, the L values of the black brightening flakes (L = 28.6 to 36.8) of Examples enclosing the black pigment were higher than those of the products (L = 22.6 to 24.0) of Comparative Examples comprising only black pigment particles. The products of Example had good brightness and shined black clearly.

Examples 8 and 9

The black brightening flakes (flaky metal oxide containing black iron oxide) prepared in Examples 1 and 2 were subjected to acid treatment to measure ΔE. The results are shown in Table 3. The ΔE values were very small values of 0.08 to 0.15. From the results, it is understood that the products of Examples have excellent acid resistance, resulting in little discoloration.

Table 3

|  | Example 8 | Example 9 | Comparative Example 4 |
|---|---|---|---|
| Content of black pigment (% by mass) | 10 | 30 | - |
| a* (Before acid treatment) | 1.02 | 0.99 | 1.05 |
| b* (Before acid treatment) | -0.85 | -0.80 | -0.83 |
| a* (After acid treatment) | 1.06 | 1.08 | 1.85 |
| b* (After acid treatment) | -0.78 | -0.68 | -0.18 |
| ΔE | 0.08 | 0.15 | 1.03 |

Comparative Example 4

The black iron oxide of Comparative Example 1 was subjected to acid treatment to measure the hue value before and after acid treatment, thereby to obtain ΔE. The results are shown in Table 3. It is understood that the product of Comparative Example had ΔE of more than 1 and the color change was significant, which shows inferior acid resistance.

Comparative Examples 5 and 6

500 ml of silicon tetramethoxide, 120 ml of 0.2N nitric acid, 330 ml of ethanol and 330 ml of isopropanol were mixed. 87 g (addition amount of 30% to mother material of silica) of black iron oxide (Comparative Example 5) or black titanium oxide (Comparative Example 6) as a black pigment was added thereto. After stirring for 1 hour, the mixture was cured at 50°C for 5 hours to prepare a silica sol solution containing the dispersed black pigment. A stainless steel plate of 10 cm square was dipped into the solution, and the plate was coated by dipping method so as to have the coating film thickness of 1.0 μm after drying . After the stainless steel plate was put into a drying furnace at 120°C for 5 minutes, and the coating film was dried, and then the flake was peeled off by scraping with a scraper. The obtained flakes were burned at 400°C for 2 hours to obtain black brightening flakes containing the dispersed black pigment and having silica as a major component. The black brightening flakes were classified by the known equipment and adjusted to have an average particle diameter of 15 μm, an average thickness of 1.0 μm, and an average aspect ratio of 15.

The black brightening flakes were evaluated in a similar manner to Example 1. The results are shown in Table 4. The products of Comparative Example had higher hiding indexes of 1.23 to 1.25 in comparison with those (1.00 to 1.10) of Examples 1 to 7 and thereby the products of Comparative Examples were proven to have low hiding power. This low hiding power is presumably based on the fact that the dispersibility of the black pigment was not so good because the silica which was the mother material of the flakes was not derived from colloidal silica as in Examples but derived from silicon alkoxide.

Table 4

| Comparative Example | 5 | 6 |
|---|---|---|
| Average particle diameter (μm) | 15 | 15 |
| Average thickness (μm) | 1 | 1 |
| Average aspect ratio | 15 | 15 |
| Black pigment | Black iron oxide | Black titanium oxide |
| Content of black pigment (% by mass) | 30 | 30 |

Table continued

| Comparative Example | 5 | 6 |
|---|---|---|
| Dispersibility | ◎ | ◎ |
| L* | 33.5 | 31.2 |
| a* | 0.95 | 0.40 |
| b* | -0.83 | -0.32 |
| Hiding index | 1.25 | 1.23 |

By comparison with Examples and Comparative Examples, it is understood that there is obtained the black brightening flakes having excellent dispersibility, brightness, acid resistance, and hiding power caused by including the black pigment in the flakes of the metal oxide derived from colloidal metal oxide particles.

Example 10

There were mixed 1,000 g of colloidal alumina (trade name: ALUMINASOL-520, manufactured by NISSAN CHEMICAL INDUSTRIES, Ltd.), 500 g of ethanol, and 500 g of water. To the mixture was added 50 g of black titanium oxide (manufactured by Daito Kasei Kogyo Co. , Ltd.), and the mixture was dispersed uniformly with use of a homogenizer to prepare an alumina sol solution containing black titanium oxide particles. A stainless steel plate of 10 cm square was dipped in and coated with this solution so that the coating film had a thickness of 1.0 $\mu$m after drying. Thereafter, the stainless steel plate was placed in a drying furnace at 120°C for 5 minutes to dry the coating film, and the flake was peeled off by scraping with a scraper. The resulting flakes were burned at 600°C for 2 hours to obtain black brightening flakes containing the dispersed black pigment and having alumina as a major component. The content of the black titanium oxide in the black brightening flake was 20% by mass. The black brightening flakes were classified by the known equipment and adjusted to have an average diameter of 80 $\mu$m, an average thickness of 1.0 $\mu$m, and an average aspect ratio of 80.

The black brightening flakes were evaluated by the above evaluation method. It was elucidated that L* value was 32.4, a* value was 0.18, and b* value was -0.33, and the brightness of said flakes was relatively high. The uniform dispersibility was expressed in terms of the grade : ◎.

Example 11

365 g of colloidal silica (trade name: SILICADOL 30A, manufactured by NIPPON CHEMICAL INDUSTRIAL Co. , Ltd. ; particle diameter:20 nm, dispersion medium: water), 119 g of tetramethoxysilane (methyl orthosilicate, manufactured by Tama Chemicals Co., Ltd.), 20 g of water, 6 ml of 60% nitric acid, 395 g of isopropyl alcohol, 52 g of iron oxide ($Fe_2O_3$: hematite) fine particle (trade name: FR-20, manufactured by SAKAI CHEMICAL INDUSTRY Co. , Ltd.), and 657 g of titania colloid (trade name: CS-N, manufactured by ISHIHARA TECHNO Co.) were mixed uniformly using a homogenizer. The mixture was cured at 40°C for 6 hours in a sealed container to prepare a silica sol solution containing iron oxide ($Fe_2O_3$) particles and titanium oxide ($TiO_2$) particles. A stainless steel plate of 10 cm square was dipped in and coated with the above solution by the dipping method so that the coating film has a thickness of 1.0 (m after drying. The stainless steel plate was put into a drying furnace at 120°C for 5 minutes to dry the coating film, and the flake was peeled off by scraping with a scraper. The obtained flakes were burned at 900°C for 2 hours in gas flow of 10% hydrogen and 90 % nitrogen in a tubular furnace to reduce iron oxide and titanium oxide, thereby to obtain black brightening flakes which contain the dispersed particles of black iron oxide ($Fe_3O_4$) and low order titanium oxide ($TiO_x$; wherein x is about 0.7) and contain silica as a major component. The content of the black iron oxide and the low order titanium oxide was 60% by mass in the flakes. Further, the flakes were classified by the known equipment to adjust such that the average diameter was 10 $\mu$m, the average thickness was 1.0 $\mu$m, and the average aspect ratio was 10.

The black brightening flakes were evaluated by the above evaluation method, revealing that L* value was 31.8, a* value was 2.50, and b* value was -3.75, and the brightness was relatively high. The uniform dispersibility was expressed in terms of the grade: ◎.

Subsequently, cosmetics were produced as a trial, using the black brightening flakes prepared in the above Examples and Comparative Examples, and the sensory test was carried out on their use feeling. The items of sensory test were three: finished feeling, touch feeling when applied to the skin and the eyelashes, and beautifulness of black color. Each item was evaluated on the basis of 5 grades of 1 to 5. The evaluation criteria of the above items are shown in Tables 5 to 7.

Table 5

| Evaluation | Finished feeling |
|---|---|
| 1 | Very unnatural |
| 2 | Unnatural |
| 3 | Ordinary |
| 4 | tolerably natural |
| 5 | Natural |

Table 6

| Evaluation | Touch feeling |
|---|---|
| 1 | Rough feeling |
| 2 | Slightly rough feeling |
| 3 | Ordinary |
| 4 | A little smooth |
| 5 | Smooth |

Table 7

| Evaluation | Beautifulness of black color |
|---|---|
| 1 | Uneven, and no brightness |
| 2 | No unevenness and no brightness |
| 3 | Ordinary |
| 4 | Beautiful black color with a little brightness |
| 5 | Clear black color with brightness and transparent feeling |

Ten panelists were employed in the following sensory tests of the cosmetics. The finished feeling, touch feeling, and beautifulness of black color of the cosmetics were evaluated based on the average value of the evaluation points by 10 panelists. Additionally, to make the evaluation results easy to be understood, the following symbols shown in Table 8 are marked for the evaluation results.

Table 8

◎:    At least 4.5, but up to 5.0
○:    At least 3.5, but less than 4.5
●:    At least 2.5, but less than 3.5
Δ:    At least 1.5, but less than 2.5
×:    At least 1.0, but less than 1.5

Example 12: Emulsified Mascara

An emulsion type mascara was prepared from the following components shown in Table 9.

Table 9

| (1) | Hydroxyethylcellulose | 1.0 |
|---|---|---|

Table continued

| (2) | Methyl Parahydroxybenzoate | 0.2 |
| (3) | Glycerin | 0.3 |
| (4) | Polyethylene glycol with high polymerization degree (Average Molecular Weight: 2,000,000) | 0.5 |
| (5) | Purified water | 65.0 |
| (6) | Black brightening flake of Example 2 | 3.0 |
| (7) | Triethanolamine | 3.0 |
| (8) | Stearic acid | 5.0 |
| (9) | Beeswax | 9.0 |
| (10) | Carnauba wax | 3.0 |
| (11) | Paraffin wax | 10.0 (% by mass) |

The components (1) to (5) were mixed together, and heated to 75°C to be uniformly dissolved. After addition of the black pigment of component (6), the mixture was uniformly dispersed through a colloid mill. Further, the component (7) was added thereto, dissolved, and heated to 75°C. To the mixture was further added a mixed solution of the components (8) to (11) which had been heated and melted, and the resulting mixture was emulsified and cooled to obtain an emulsion type mascara.

Comparative Example 7

An emulsion type mascara was produced in a similar manner to Example 12, except that the black iron oxide of Comparative Example 1 was used instead of the black brightening flake of the component (6) (a flaky metal oxide enclosing black iron oxide) of Example 12.

Table 10

| | Finished feeling | Touch feeling | Beautifulness of black color |
|---|---|---|---|
| Example 12 | ○ | ◎ | ◎ |
| Comparative Example 7 | ○ | Δ | ○ |

It is understood from Table 10 that the emulsion type mascara according to the present invention is excellent in the touch feeling and the beautifulness of black color.

Example 13: Eye Shadow

An eye shadow was prepared from the following components shown in Table 11.

Table 11

| (1) | Talc | 21 |
| (2) | Muscovite | 20 |
| (3) | Black brightening flake of Example 5 | 40 |
| (4) | Pigment | 12 |
| (5) | Squalane | 4 |
| (6) | Cetyl 2-ethylhexanoate | 1.9 |
| (7) | Sorbitan Sesquioleate | 0.8 |
| (8) | Antiseptic | 0.1 |
| (9) | Fragrance | 0.2 (% by mass) |

The above components (1) to (4) were mixed together using a Henschel mixer, and the mixture was sprayed with a material obtained by heating and mixing the components (5) to (9) . After being further mixed, the resulting mixture was milled, and discharged into a given medium-sized dish to obtain an eye shadow.

Comparative Example 8

An eye shadow was prepared similarly to Example 13 except that a mixture of black iron oxide of Comparative Example 1 and black titanium oxide of Comparative Example 2 (mixing ratio was 1:1 by mass) was used instead of the black brightening flake of the component (3) (a metal oxide flake containing black pigments (black iron oxide + black titanium oxide)).

The results of the sensory test of Example 13 and Comparative Example 8 are collectively shown in Table 12.

Table 12

|  | Finished feeling | Touch feeling | Beautifulness of black color |
|---|---|---|---|
| Example 13 | O | ◎ | ◎ |
| Comparative Example 8 | ○ | Δ | ○ |

It is understood from Table 12 that the eye shadow according to the present invention is excellent in the touch feeling and the beautifulness of black color.

Example 14: Eyeliner

An eyeliner was prepared from the following components shown in Table 13.

Table 13

| (1) | Non-aqueous polymer dispersion | 25.0 |
|---|---|---|
| (2) | Paraffin wax | 2.0 |
| (3) | Bentonite | 3.0 |
| (4) | Black brightening flake of Example 3 | 2.0 |
| (5) | Mica | 30.0 |
| (6) | Isopar | 38.0 |
| (7) | Fragrance | q.s. (% by mass) |

The components (1) to (7) were heated to 85°C, stirred, and mixed together, and then cooled down to room temperature, and packed in an air-tight and brush-equipped container to produce an eyeliner.

Comparative Example 9

An eyeliner was prepared similarly to Example 14 except that the carbon black of Comparative Example 3 was used instead of the black brightening flake of the component (4) (a flaky metal oxide enclosing black titanium oxide).

The results of the sensory test of Example 14 and Comparative Example 9 are summarized in Table 14.

Table 14

|  | Finished feeling | Touch feeling | Beautifulness of black color |
|---|---|---|---|
| Example 14 | ○ | ◎ | ◎ |
| Comparative Example 9 | ○ | ○ | ○ |

It is understood from Table 14 that the eyeliner according to the present invention is excellent in the touch feeling and the beautifulness of black color.

Example 15: Nail Color

A nail color was prepared from the following components shown in Table 15.

Table 15

| (1) | Nitrocellulose | 18.0 |
|---|---|---|

Table continued

| (2) | Toluenesulfonamide resin | 6.0 |
| (3) | Acetyl tributyl citrate | 6.0 |
| (4) | Alkyl acrylate copolymer | 2.0 |
| (5) | Isopropanol | 5.0 |
| (6) | Benzyldimethylammonium hectorite | 2.0 |
| (7) | Ethyl acetate | 20.0 |
| (8) | Butyl acetate | q.s. |
| (9) | Prussian blue | 0.1 |
| (10) | Black brightening flake of Example 2 | 10.0 (% by mass) |

After the components (1) to (4) and the components (9) to (10) were kneaded by a roller mill, the components (5) to (8) were added thereto, melted, diffused, and dispersed uniformly, and packed in a given container to obtain a nail color.

Comparative Example 10

A nail color was prepared similarly to Example 15 except that the black iron oxide of Comparative Example 1 was used instead of the black brightening flake of the component (10) (a flaky metal oxide enclosing black iron oxide). The results of the sensory test of Example 15 and Comparative Example 10 are summarized in Table 16.

Table 16

| | Finished feeling | Touch feeling | Beautifulness of black color |
|---|---|---|---|
| Example 15 | ○ | ◎ | ◎ |
| Comparative Example 10 | ○ | ○ | ○ |

It is understood from Table 16 that the nail color according to the present invention is excellent in the touch feeling and the beautifulness of black color.

Example 16: Oily Stick Foundation

An oily stick foundation was prepared from the following components shown in Table 17.

Table 17

| (1) | Black brightening flake of Example 1 | 13.0 |
| (2) | Titania | 7.0 |
| (3) | Kaolin | 20.0 |
| (4) | Talc | 2.0 |
| (5) | Mica | 26.0 |
| (6) | Red iron oxide | 1.0 |
| (7) | Yellow iron oxide | 3.0 |
| (8) | Black brightening flake of Example 1 | 0.5 |
| (9) | Solid paraffin | 3.0 |
| (10) | Microcrystalline wax | 7.0 |
| (11) | Vaseline | 15.0 |
| (12) | Dimethlpolysiloxane | 3.0 |
| (13) | Squalane | 5.0 |
| (14) | Isopropyl palmitate | 17.0 |
| (15) | Antioxidant | q.s. |
| (16) | Fragrance | q.s. (% by mass) |

The components (9) to (15) were melted at 85°C, and the components (1) to (8) were added thereto. The mixture was mixed by a disper and dispersed by a colloid mill. After that, the component (16) was added thereto, and the mixture was degassed and poured into a container at 70°C, and cooled down to obtain an oily stick foundation.

Example 17: Cheek Rouge

A cheek rouge was prepared from the following components shown in Table 18.

Table 18

| (1) | Kaolin | 24.0 |
|---|---|---|
| (2) | Black brightening flake of Example 4 | 0.1 |
| (3) | Red iron oxide | 0.3 |
| (4) | Red No. 202 | 0.5 |
| (5) | Ceresin | 15.0 |
| (6) | Vaseline | 20.0 |
| (7) | Liquid paraffin | 25.0 |
| (8) | Isopropyl myristate ester | 15.0 |
| (9) | Antioxidant | q.s. (% by mass) |

The components (1) to (4) were added to a portion of the component (7), and the mixture was treated by a roller to prepare a pigment material. The components (5) to (9) were heated and melted at 90°C, and then added to the above pigment material. The mixture was dispersed uniformly by a homo mixer and filled into a given container to prepare a target cheek rouge.

Example 18: Lipstick

A lipstick was prepared from the following components shown in Table 19.

Table 19

| (1) | Hydrocarbon wax | 20 |
|---|---|---|
| (2) | Candelilla wax | 3 |
| (3) | Glyceryl isostearate | 40 |
| (4) | Liquid paraffin | 26.8 |
| (5) | Titanium dioxide | 4 |
| (6) | Black brightening flake of Example 5 | 0.2 |
| (7) | Organic pigment | 5.8 |
| (8) | Fragrance | 0.2 (% by mass) |

The above components (1) to (4) were heated and melted at 85°C, and the components (5) to (7) were added thereto. After further addition of the component (8), the mixture was mixed and stirred, and then filled in a given container to obtain a lipstick.

Subsequently, a coating composition was prepared using the flaky material of the above Examples and Comparative Examples.

Example 19: Black Coating Composition

A coating composition was prepared from the following components.

First, the composition shown in the following Table 20 was dispersed for 60 minutes with use of a paint shaker to prepare a dispersed vehicle.

Table 20

| (1) | Alkyd resin varnish | 20.6 |
|---|---|---|
| (2) | Melamine resin varnish | 10.6 |
| (3) | Swasol | 15.6 |
| (4) | Black brightening flake of Example 2 | 15.6 (parts by mass) |

The components (5) to (6) shown in the following Table 21 were further added to the above dispersed vehicle and stirred to prepare a black coating composition.

Table 21

| | | |
|---|---|---|
| (5) | Alkyd resin varnish | 26.3 |
| (6) | Melamine resin varnish | 11.3(parts by mass) |

Comparative Example 11

A coating composition was prepared similarly to Example 19 except for the items(a) and (b) as following: (a) the black iron oxide of Comparative Example 1 was used instead of the black brightening flake of the component (4) in the coating composition of Example 19; (b) an amount of black iron oxide was set to 4 . 7 parts by mass in such a manner that an amount of black iron oxide in the coating composition of Comparative Example 11 becomes to be the same amount of black iron oxide in Example 19 since an amount of black iron oxide was 30% by mass in the black brightening flake of Example 2.

Uniform dispersibility and color impression of Example 19 and Comparative Example 11 were determined by visual observation. The results are shown in Table 22.

Table 22

| | Uniform dispersibility | Color impression |
|---|---|---|
| Example 19 | ◎ | Transparent and clear black color with brightness |
| Comparative Example 11 | O | Mat black color with no brightness |

It is understood from Table 22 that the black coating composition according to the present invention has an excellent uniform dispersibility and exhibits very transparent and clear black color with brightness.

Example 20: Resin Molding Composition and Molded Resin Product

98% by mass of methyl methacrylate copolymer beads and 2% by mass of the black brightening flake of Example 5 (flaky metal oxide enclosing a mixture of black iron oxide and black titanium oxide) were mixed together with stirring by a Henschel mixer to prepare a resin molding composition. The obtained composition was extruded by an extruder to prepare an acrylic resin molded product having a thickness of 0.5 mm. The molded resin product exhibited a clear black color with brightness.

Comparative Example 12

An acrylic resin molded product was prepared similarly to Example 20 except that a mixture of black iron oxide of Comparative Example 1 and black titanium oxide of Comparative Example 2 (mixture ratio = 1:1) was used in the same amount instead of the black brightening flake of Example 20 to prepare a molded resin product having a thickness of 0.5 mm. The molded resin product had no brightness and exhibited a mat black color.

It is understood from Example 20 and Comparative Example 12 that the molded resin product according to the present invention exhibits transparent and clear color with brightness.

Example 21: Ink Composition

A black ink composition was prepared by mixing the following components sufficiently.

Table 23

| | | |
|---|---|---|
| (1) | Black brightening flake of Example 6 | 12 |
| (2) | Ketone resin | 19 |
| (3) | Ethanol | 59 |
| (4) | Propylene glycol monomethyl ether | 10 (% by mass) |

When the ink composition was used for writing on a white paper, the writing showed a very clear black color.

**Industrial Applicability**

The black brightening flake according to the present invention can be used as a filler for cosmetics, coating materials, resin molded products, and inks, etc.

**Claims**

1. A black brightening flake comprising a metal oxide, as a mother material, which is derived from a colloidal metal oxide particle and 5 to 70% by mass black pigment dispersedly contained in the mother material.

2. The black brightening flake according to claim 1, having an average particle diameter of 3 to 500 μm, an average thickness of 0.1 to 5 μm, and an average aspect ratio of 5 to 300.

3. The black brightening flake according to claim 1 or claim 2, which is obtained by coating a base material with a colloidal solution containing the black pigment and a colloidal metal oxide particle having a particle diameter of 5 to 500 nm, drying the coated material for solidification, and peeling off the dried coating from the above base material, followed by heating.

4. The black brightening flake according to any one of claims 1 to 3, wherein the mother material comprises, as a major component, at least one member selected from the group consisting of silica dioxide, aluminum oxide, zirconium oxide, and titanium oxide.

5. The black brightening flake according to any one of claims 1 to 4, wherein the black pigment is at least one member selected from the group consisting of black iron oxide, black titanium oxide, carbon black, copper chromium black, cobalt black, and copper manganese black.

6. A cosmetic, comprising the black brightening flake according to any one of claims 1 to 5.

7. A coating composition, comprising the black brightening flake according to any one of claims 1 to 5.

8. A coating film, **characterized by** being formed by application of the coating composition according to claim 7, followed by curing.

9. A resin molding composition, comprising the black brightening flake according to any one of claims 1 to 5.

10. A molded resin product, **characterized by** being formed by molding the resin molding composition according to claim 9.

11. An ink composition, comprising the black brightening flake according to any one of claims 1 to 5.

<table>
<tr><td colspan="2" align="center">**INTERNATIONAL SEARCH REPORT**</td><td colspan="2">International application No.<br>PCT/JP2004/013770</td></tr>
</table>

| | |
|---|---|
| A. CLASSIFICATION OF SUBJECT MATTER<br>Int.Cl⁷ C09C1/48, 3/06, 1/24, 1/36, 1/14, 1/00, C09D11/00, 201/00,<br>C08L101/00, C08K9/02, 7/00 | |

According to International Patent Classification (IPC) or to both national classification and IPC

B. FIELDS SEARCHED

Minimum documentation searched (classification system followed by classification symbols)
Int.Cl⁷ C09C1/48, 3/06, 1/24, 1/36, 1/14, 1/00, C09D11/00, 201/00,
C08L101/00, C08K9/02, 7/00

Documentation searched other than minimum documentation to the extent that such documents are included in the fields searched
Jitsuyo Shinan Koho          1922–1996   Toroku Jitsuyo Shinan Koho   1994–2004
Kokai Jitsuyo Shinan Koho    1971–2004   Jitsuyo Shinan Toroku Koho   1996–2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 6-116520 A (Nippon Sheet Glass Co., Ltd.),<br>26 April, 1994 (26.04.94),<br>Claims; Par. No. [0011]<br>(Family: none) | 1-11 |
| Y | JP 8-239310 A (Nippon Sheet Glass Co., Ltd.),<br>17 September, 1996 (17.09.96),<br>Claims; Par. No. [0002]<br>(Family: none) | 1-11 |
| Y | JP 64-9803 A (Sumitomo Chemical Co., Ltd.),<br>13 January, 1989 (13.01.89),<br>Claims; page 5, upper right column, the last<br>line to page 6, upper right column, 7th line<br>from the bottom<br>(Family: none) | 1-11 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 October, 2004 (13.10.04) | Date of mailing of the international search report<br>09 November, 2004 (09.11.04) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| International application No. |
| --- |
| PCT/JP2004/013770 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| Y | JP 60-81012 A (Yugen Kaisha Miyoshi Kasei), 09 May, 1985 (09.05.85), Claims; page 1, lower right column, 3rd line from the bottom to page 2, upper left column, line 8 (Family: none) | 1-11 |
| Y | JP 7-133211 A (Kirei Keshohin Kabushiki Kaisha), 23 May, 1995 (23.05.95), Claims; Par. Nos. [0027] to [0030] (Family: none) | 1-11 |
| Y | JP 2001-152049 A (Kabushiki Kaisha Haimira), 05 June, 2001 (05.06.01), Claims (Family: none) | 1-11 |
| Y | JP 52-78927 A (Merck Patent GmbH.), 02 July, 1977 (02.07.77), Claims & BE 849593 A      & DE 2557796 A & FR 2336456 A      & GB 1517230 A & IT 1066602 A      & NL 7614266 A & US 4076551 A | 1-11 |
| Y | JP 7-500366 A (Merck Patent GmbH.), 12 January, 1995 (12.01.95), Claims & CN 1071673 A      & DE 4138376 A & CZ 9400932 A      & EP 608388 A & ES 2120497 A      & FI 941773 A & US 2003-47115 A      & KR 253774 B & WO 93-8237 A1 | 1-11 |

Form PCT/ISA/210 (continuation of second sheet) (January 2004)